# EUROPEAN PATENT SPECIFICATION

(11) **EP 1 418 085 B1**
(45) Date of publication and mention of the grant of the patent: **06.09.2006**
(21) Application number: 03025182.1
(22) Date of filing: 04.11.2003
(51) Int. Cl.: B60N 2/28, B60N 3/06

(54) **Child car seat**
Kindersitz für Kraftfahrzeug
Siège d'enfant pour automobile

(30) Priority: 05.11.2002 GB 0225734; 03.11.2003 GB 0325576
(43) Date of publication of application: 12.05.2004
(73) Proprietor: Equipbaby Limited, Windsor, Berkshire SL4 1DN (GB)
(72) Inventor: Barker, Derrick John Martin, Bishampton, Worcestershire WR10 2LU (GB)
(74) Representative: Bailey, David Martin

(56) References cited:
- EP-A- 1 145 898
- DE-A- 4 329 885
- FR-A- 2 435 371
- FR-A- 2 787 977
- GB-A- 2 282 321
- US-A- 6 000 753
- US-A1- 2002 043 840
- US-B1- 6 193 312
- US-B1- 6 439 660

## Description

Provision of a suitable child restraint as a child grows requires the parent to purchase two or three different seats. Furthermore existing seats that convert from rearward facing to forward facing do not offer that portability benefits of an infant carrier.

The invention relates to a child restraint system comprising different structural elements, which can be combined in different configurations to provide a suitable restraint for different ages from birth to 3 years.

US 6 193 312, describes an infant car seat comprising a securing structure securable to a seat of a vehicle and a seat fixture providing a seat surface for a child.

According to the present invention, there is provided an infant car seat as defined in Claim 1.

Preferably, the headrest is further provided with a support leg.

Preferably, the support leg is pivotable between a stowed position and a supporting position.

Preferably, the seat fixture comprises a handle adapted, in the first configuration, to form a foot rest.
Figure 1 shows an infant car seat;
Figure 2 shows a securing structure;
Figure 3 shows the infant car seat of Figure 1 being introduced into the securing structure of Figure 2;
Figure 4 shows the combined securing structure and infant car seat;
Figure 5 shows a seat with harness for use by a toddler;
Figure 6 shows the seat of Figure 5 adjusted and installed with the infant car seat of Figure 1 and retained within it;
Figure 7 shows an embodiment of an infant car seat in accordance with the present invention supported rearward facing within the securing structure incorporating a support leg as part of the headrest;
Figure 8 shows the securing structure of Figure 7 with the seat fixture removed;
Figure 9 shows the seat fixture supported in a forward facing configuration within the securing structure incorporating the headrest as an extended part of the infant car seat; Figure 10 shows the securing structure with the headrest and support leg folded in and secured with an adult seat restraining belt without the fixture installed.

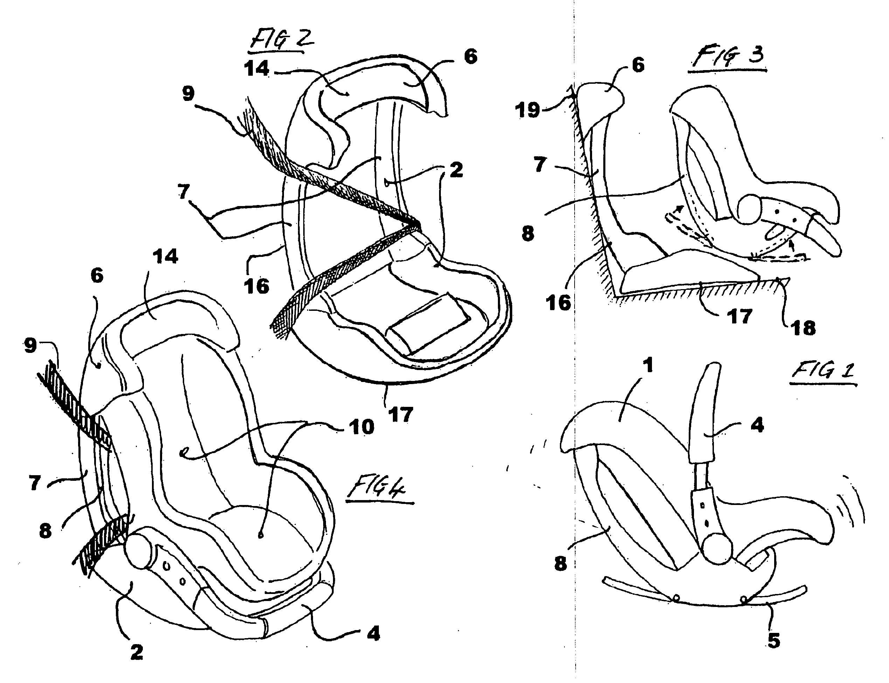

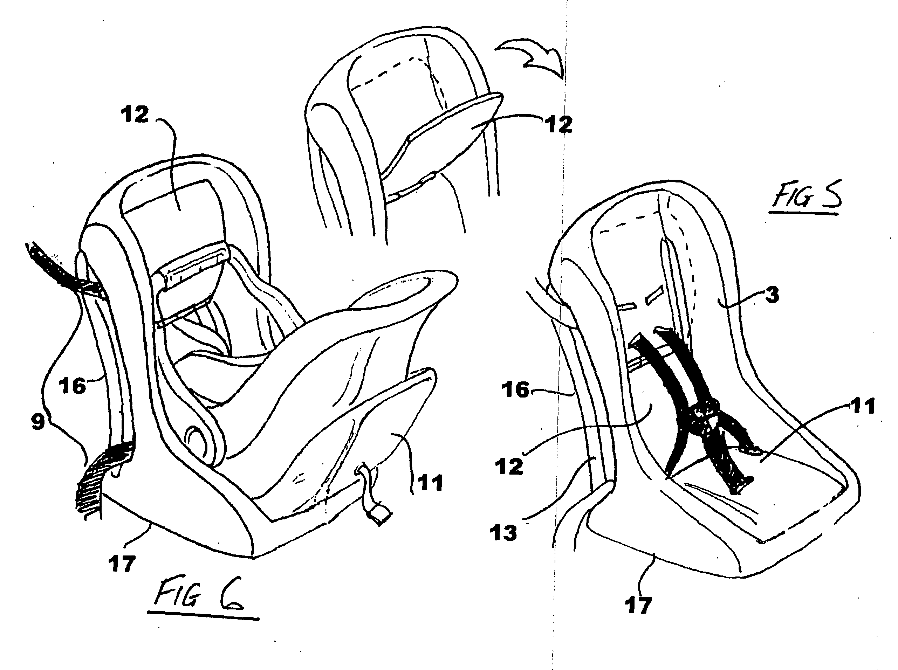

As shown in Figures 1-4 an infant car seat (1) includes a carry handle (4) and a base (5). The handle (4) is rotatable such that when combined with the securing structure (2) or seat fixture (3) acts to lock on to the securing structure (2) and fixture 3. In addition the base (5) can also interlock with securing structure (2) or fixture (3) to secure the infant car seat.

The seat securing structure (2) comprises a support surface (16) and support surface (17), which are compatible with the vehicle seat surfaces (18) and (19).

The securing structure (2) comprises a brace (7) and a headrest (6). Headrest (6) incorporates a surface (14). When the infant car seat is combined with the securing structure (2) the seat surface (10) and the headrest surface (14) create a continuous and extended seat surface for the older child.

The seat belt (9) is used to secure the securing structure (2) and infant seat (1) by passing in front of brace (7) on the securing structure (2) and brace (8) on the infant car seat (1), when used forward facing.

As shown in Figures 5 and 6 an alternative fixture (3) is convertible to act as a securing means for the infant car seat (1) when rearward facing. The fixing (3) includes a movable base surface (11) and moveable back surface (12). When used to secure the infant car seat (1) the surfaces (11) and (12) adjusted so as to provide a recessed space for securing the infant car seat (1). Fixture (3) can be used independently of the infant car seat (1) suitable for the older child travelling forward faxing.

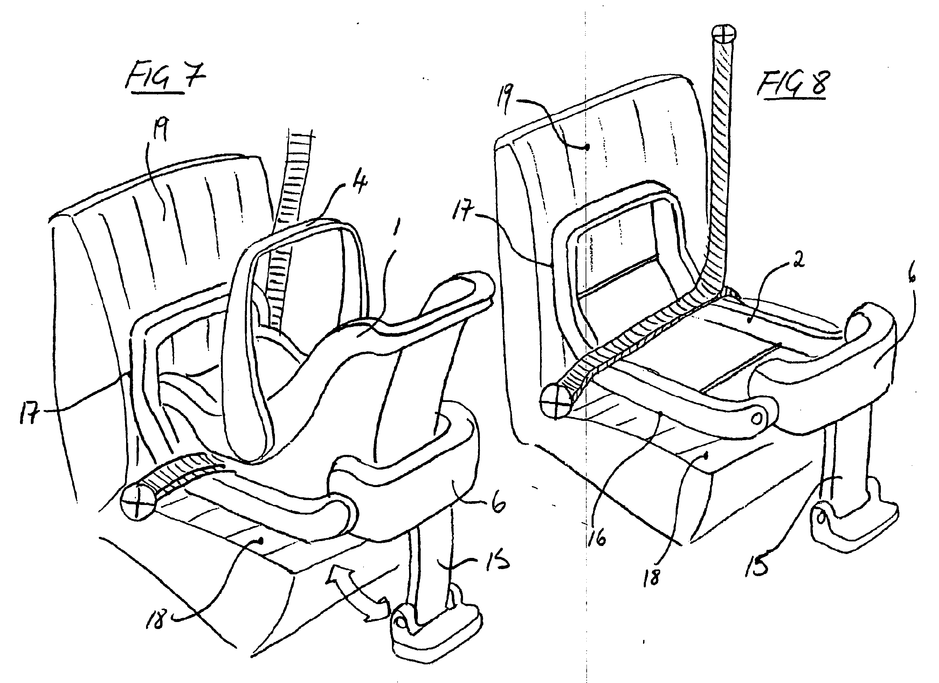

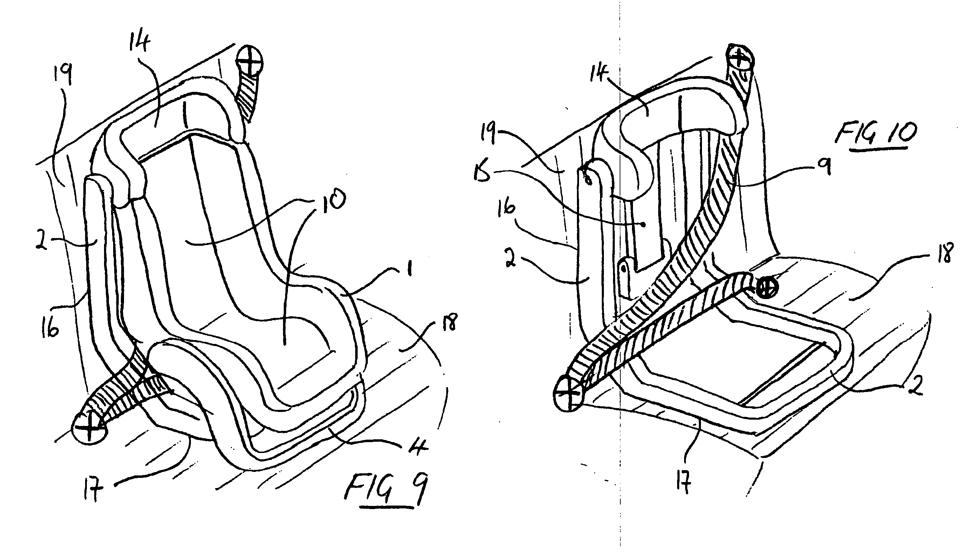

Figures 7-10 show an embodiment of an infant car seat in accordance with the present invention. The securing structure performs a dual function and be used as an infant car seat support fixture for supporting the infant car seat when rearward facing and forward facing.

The headrest (6) incorporates a surface (14) combined with a support leg (15). The headrest and support leg assembly can rotate so as to be positioned to support the infant car seat when rearward facing. When the securing structure is repositioned to be used forward facing the headrest (6) is aligned such that surface (14) is combined with surface (10) of the infant car seat (1) to form a continuous seat surface for the older child.

Surface (16) on the securing structure (2) is positioned against the vehicle seat surface (18) for a rearward facing infant car seat and is positioned against vehicle seat surface (19) when used forward facing for the older child.

Surface (17) on the securing structure (2) is positioned against vehicle seat surface (19) for a rearward facing infant car seat and is positioned against vehicle seat surface (18) when used forward facing for the older child.

## Claims

1. An infant car seat comprising a securing structure (2) securable to a seat (18,19) of a vehicle, and a seat fixture (3) providing a seat surface (10) for a child; **characterised in that** the securing structure (2) is securable to the seat in first and second configurations and includes a headrest (6,14); wherein in said first configuration the headrest (6,14) provides a headrest surface (14) aligned with a rear surface of the seat fixture (3) and in said second configuration the headrest (6,14) supports the seat fixture (3).

2. An infant car seat as claimed in Claim 1 wherein the headrest (6,14) is further provided with a support leg (15).

3. An infant car seat as claimed in Claim 2 wherein the support leg is pivotable between a supporting position and a stowed position.

4. An infant car seat as claimed in Claim 1, Claim 2 or Claim 3 wherein the seat fixture (3) comprises a handle (4) adapted, in said first configuration, to form a foot rest.

## Patentansprüche

1. Kindersitz für Fahrzeuge, mit einer Befestigungsstruktur (2), die an einem Sitz (18,19) eines Fahrzeugs befestigbar ist, und einem Sitzelement (3), das eine Sitzfläche (10) für ein Kind bildet;
**dadurch gekennzeichnet, dass** die Befestigungsstruktur (2) in ersten und zweiten Konfigurationen an dem Sitz befestigbar ist und eine Kopfstütze (6,14) aufweist; wobei in der ersten Konfiguration die Kopfstütze (6,14) eine mit einer Rückfläche des Sitzelements (3) ausgerichtete Kopfstützfläche (14) bildet, und in der zweiten Konfiguration die Kopfstütze (6,14) das Sitzelement (3) stützt.

2. Kindersitz für Fahrzeuge nach Anspruch 1, bei dem die Kopfstütze (6,14) ferner mit einem Stützbein (15) versehen ist.

3. Kindersitz für Fahrzeuge nach Anspruch 2, bei dem das Stützbein zwischen einer Stützposition und einer Verstau-Position schwenkbar ist.

4. Kindersitz für Fahrzeuge nach Anspruch 1, Anspruch 2 oder Anspruch 3, bei dem das Sitzelement (3) einen Bügel (4) aufweist, der in der ersten Konfiguration zur Bildung einer Fußstütze in der Lage ist.

## Revendications

1. Siège d'enfant pour véhicule, comportant une structure d'arrimage (2) susceptible d'être arrimée à un siège (18, 19) d'un véhicule, et une armature de siège (3) procurant une surface de siège (10) pour un enfant, **caractérisé en ce que** la structure d'arrimage (2) peut être arrimée au siège dans une première et une seconde configurations, et inclut un appui-tête (6, 14), dans lequel, dans ladite première configuration l'appui-tête (6, 14) procure une surface d'appui-tête (14) qui est alignée avec la surface arrière de l'armature de siège (3), et dans ladite seconde configuration l'appui-tête (6, 14) supporte l'armature de siège (3).

2. Siège d'enfant pour véhicule selon la revendication 1, dans lequel l'appui-tête (6, 14) est en outre équipé d'une jambe de support (15).

3. Siège d'enfant pour véhicule selon la revendication 2, dans lequel la jambe de support peut pivoter entre une position de support actif et une position rentrée.

4. Siège d'enfant pour véhicule selon la revendication 1, la revendication 2 ou la revendication 3, dans lequel l'armature de siège (3) comporte une poignée (4) qui est agencée pour constituer, dans ladite première configuration, un appui pour les pieds.
